# EUROPEAN PATENT APPLICATION

(11) **EP 3 608 464 A1**
(43) Date of publication of application: **12.02.2020**
(21) Application number: 18199013.6
(22) Date of filing: 06.10.2018
(51) Int. Cl.: D06B 3/28, D06B 23/14, D06B 3/34

(54) **DYEING MACHINE WITH TWO DRIVEN REELS**

(30) Priority: 09.08.2018 TW 107210891 U
(71) Applicant: Sheng Zhun Enterprise Co., Ltd., New Taipei City 244 (TW)
(72) Inventor: KUAN, Chia-Li, New Taipei City 244 (TW)
(74) Representative: Cabinet Chaillot

(57) **Abstract**

A dyeing machine with dual reels and low liquor ratio has a first rolling reel (21) and a second rolling reel (22) respectively at a head section (11) and a rear section (12) of a body. A piece of fabric (C) is smoothly driven and rolled within a guiding tube (20) by the rolling reels (21), (22) and goes into a storage tank (15) for continuous spreading and dipping. The head section (11) and the rear section (12) of the body (10) are arranged upwardly to create different sloping angles of the body (10) to reduce creasing of the fabric (C) and to effectively lower a liquor ratio of liquid dye (L).

## Description

### BACKGROUND OF THE INVENTION

### 1. Field of the Invention:

The present invention relates to a dyeing machine, particularly to one that has two rolling reels, each disposed at an end of a body of the dyeing machine, and different sections sloping at different angles for a piece of fabric to go through the dyeing process smoothly with low liquor ratio of the liquid dye.

### 2. Description of the Related Art

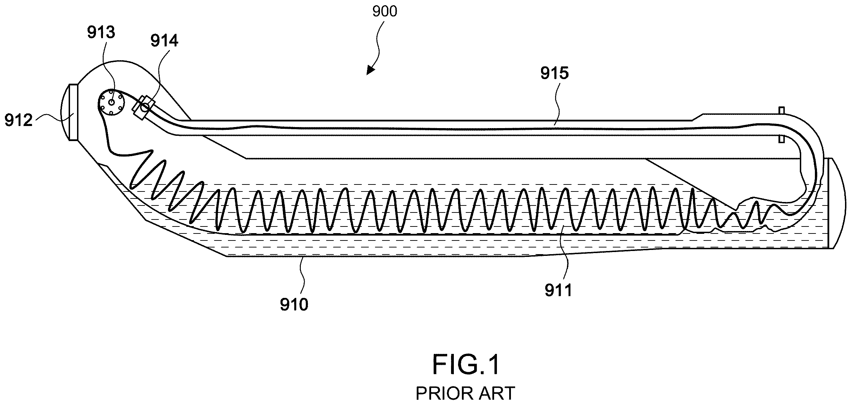

A structure of a horizontal dyeing machine **900** is illustrated in FIG. 1, mainly including a body **910**, a storage tank **911** formed inside the body **910**, an opening **912** arranged at a head section of the body **910**, a rolling reel **913** arranged at the head section of the body **910**, a nozzle **914** arranged at the head section of the body **910** and a guiding tube **915** arranged above the body **910**. The fabric **C** is sent into the body **910** via the opening **912** and further driven by the rolling reel **913** and the nozzle **914** for the fabric **C** to be rolling within the guiding tube **915** and the storage tank **911** circulatively for continuous spreading and dipping process. However, since the driving force of the fabric **C** comes from the rolling reel **913** and the nozzle **914**, when the fabric **C** enters to a rear section of the guiding tube **915** and an overlapping section of the guiding tube **915** and the storage tank **911**, the driving force is insufficient for the fabric **C** to go further into the storage tank **911**.

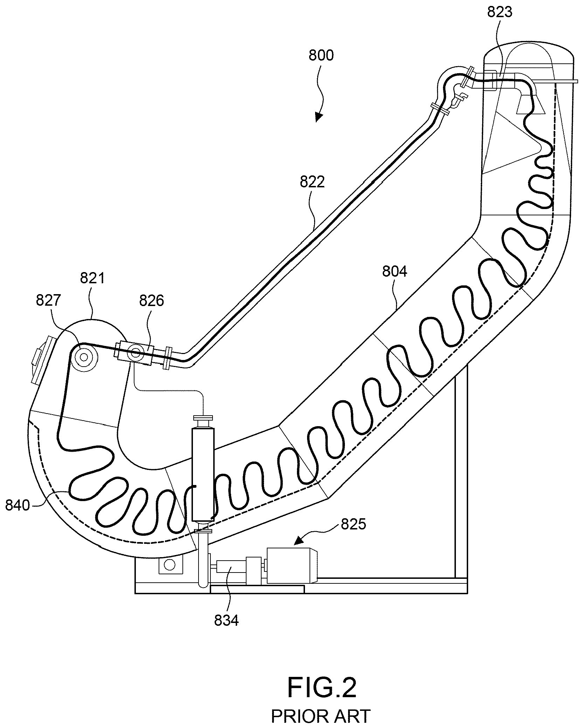

Furthermore, as wastes reductions getting more and more attention in recent years, the discharging of the used liquid dye becomes one of the issues to be deal with. If the liquor ratio can be lowered, it could be an achievement in wastes reductions. FIG. 2 shows an oblique dyeing machine with ultra-low liquor ratio **800**, mainly including a head **821**, a guiding tube **822**, a fabric swaying device **823**, a body **824** and a circulation device **825**. The guiding tube **822** is arranged at an oblique angle as a front end thereof lower than a rear end thereof, and the body **824** is arranged at an oblique angle as a rear end thereof higher than a front end thereof. A piece of fabric **840** would be drawn by gravity for rolling operation instead of requiring a great amount of liquid dye; in addition, the liquid dye would also flow back to a collecting area to be gathered by a pump **834**. However, such structure would require high speed pressure for the nozzle **826** to provide the driving force so that the fabric **840** can be moved forward for operation. Thus, the dyeing machine **800** would need a motor that consumes huge amount of electricity for operation, and the rolling speed of the rolling reel **827** cannot be synched with the nozzle **826**, making the rolling of the fabric **840** unsmoothly. Besides, before entering into the fabric swaying device **823**, the rolling speed of the fabric **840** would suddenly drop and the fabric **940** would be creased due to the sudden change of the rolling speed, making the rolling even more unsmoothly.

### SUMMARY OF THE INVENTION

It is a primary objective of the present invention to provide a dyeing machine that has different sloping angles at different sections of a body to reduce the amount of liquid dye left in the body, so as to lower the liquor ratio of the liquid dye.

Another objective of the present invention is to provide a dyeing machine that has one rolling reel at each end of the body for a piece of fabric to go through a guiding tube into a storage tank inside the body smoothly for continuous spreading and dipping of the liquid dye.

Yet another objective of the present invention is to provide a dyeing machine that has a nozzle pushing and driving the rolling of fabrics in operation to avoid the application of motors that requires a great amount of electricity and to reduce the possibility of the fabrics getting damaged by having a pressure of the nozzle decreased.

Still another objective of the present invention is to provide a dyeing machine that has a controller connected to motors of the dyeing machine to adjust the rolling of the fabrics timely and to reverse the rolling direction of the fabrics for the nozzle to cleanse the surfaces of the fabrics.

In order to achieve the objects above, the present invention mainly comprises a body, a guiding tube, a first rolling reel, a first motor, a nozzle, a second rolling reel, a second motor and a controller.

Whereby the fabric is rolled by the first and second rolling reels within the guiding tube smoothly into the storage tank; with the difference between the angles of the first and second sloping sections, the fabric is not creased and liquid dye can easily flow into the first sloping section to lower a liquor ratio thereof.

Preferably, the angle of the first sloping section is arranged between 2°-10° and the angle of the second sloping section is arranged wider than 16°.

In addition, the guiding tube can be arranged above the body to form an upward rolling structure, or the guiding tube can be arranged below the body to form a downward rolling structure.

With the structures disclosed above, the present invention has features stated as following.
1. The first and second sloping sections at the middle part of the body has different sloping angles as the angle of the first sloping section narrower than the angle of the second sloping section. With the different sloping degrees, the fabric would not be creased when going through the first sloping section and the liquid dye would flow to the first sloping section quickly, thereby lowering the liquor ratio.
2. The first and second rolling reels arranged respectively at the head section and the rear section are able to push and draw the fabric to roll smoothly within the guiding tube into the storage tank for continuous spreading and dipping. In addition, the head section and the rear section of the body each has its corresponding rolling reel and opening to make the present invention a dyeing machine with dual heads.
3. The controller arranged outside the body is connected to the first and second motors for controlling of the rotational speed of both motors, thereby the rolling of the fabrics can be adjusted appropriately and timely during the operation and ensure a better quality of the fabrics; also, the controller is able to operate the rolling in a reverse direction for cleansing the surfaces of the fabrics by the nozzle.
4. The present invention does not require motors operated by a great amount of electricity for pushing the fabrics forward with high pressure, making it energy-saving, and the nozzle of the dyeing machine has a reduced pressure to ensure the fabrics would not be damaged during the dyeing process.

### BRIEF DESCRIPTION OF THE DRAWINGS

FIG. 1 is a schematic diagram illustrating a conventional structure of a horizontal dyeing machine;
FIG. 2 is a schematic diagram illustrating a conventional structure of an oblique dyeing machine;
FIG. 3 is a perspective view of the present invention in a preferred embodiment;
FIG. 4 is a sectional view of the present invention in a preferred embodiment;
FIG. 5 is a sectional view of the present invention in an applicable embodiment; and
FIG. 6 is a block diagram illustrating operation of the present invention.

### DETAILED DESCRIPTION OF THE PREFERRED EMBODIMENT

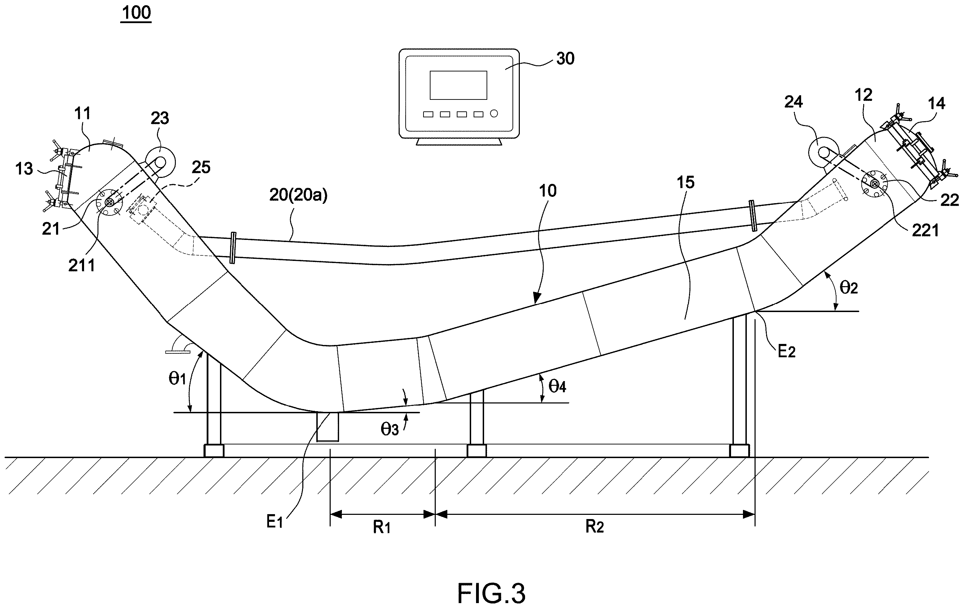

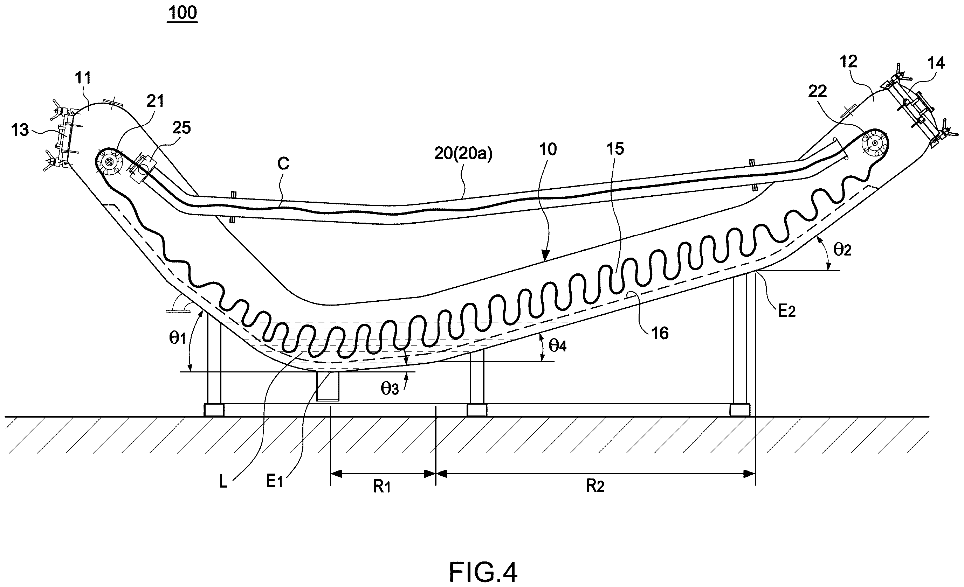

Referring to FIGS. 3-4, in a preferred embodiment, a dyeing machine with dual reels and low liquor ratio **100** mainly includes a body **10**, a guiding tube **20**, a first rolling reel **21**, a nozzle **25**, a second rolling reel **22** and a controller **30**.

The body **10** has a first opening **13** at a head section **11** for a piece of fabric **C** to be sent in and taken out; the body **10** also has a storage tank **15** therein with a perforated plate **16**.

The guiding tube **20** is connecting the head section **11** and a rear section **12** of the body **10**; in this embodiment, the guiding tube **20** is arranged above the body **10**.

The first rolling reel **21** is disposed at the head section **11** inside the body **10** near the first opening **13** and has a first axis **211** penetrating through the body **10** perpendicularly and connected to a first motor **23** to be driven thereby.

The nozzle **25** is disposed at a front end of the guiding tube **20** to push and drive the fabric **C** within the guiding tube **20** and the body **10** for continuous dipping, spreading and dyeing. Such structure is commonly seen in the prior art and the features of the present invention are further described in the following.

The second rolling reel **22** is disposed at the rear section **12** inside the body **10** near a rear end of the guiding tube **20** and has a second axis **221** penetrating through the body **10** perpendicularly and connected to a second motor **24** to be driven thereby. A second opening **14** is further arranged at the rear section **12** corresponding to the second rolling reel **22**, so that the rolling of the fabric **C** can be easily and timely adjusted. The head section **11** and the rear section **12** of the body **10** are arranged upwardly at a first angle **θ1** and a second angle **θ2** respectively. A first sloping section **R1** and a second sloping section **R2** are arranged between a substantially lowest part **E**1 of the body **10** and a sloping point **E2** of the body **10**; an angle **θ3** of the first sloping section **R1** is narrower than an angle **θ4** of the second sloping section **R2**. After experimental testing, the angle **θ3** of the first sloping section **R1** is preferably arranged between 2°-10° and the angle **θ4** of the second sloping section **R2** is preferably arranged wider than 16°. But the present invention is not limited to such application.

Whereby the fabric **C** is driven to roll by the first rolling reel **21** to the head section **11** and keeps rolling within the guiding tube **20** by the driving force of the high speed spreading of liquid dye **L** from the nozzle **25**; the second rolling reel **22** keeps driving the fabric **C** to roll forward at rear end of the guiding tube **20** and guiding the fabric **C** to roll into the storage tank **15**. With the driving of the first and second rolling reels **21**, **22**, the fabric **C** is able to be rolled within the guiding tube **20** and into the storage tank **15**. Meanwhile, the liquid dye **L** on the fabric **C** would be filtered by the perforated plate **16** in the storage tank **15**. Further with the different angles **θ3**, **θ4** of the first and second sloping sections **R1**, **R2**, the fabric **C** is able to roll into the first sloping section **R1** dry and would not be creased, thereby improving the quality of the fabric **C** after the dyeing process. The liquid dye **L** filtered by the perforated plate **16** would drip down and quickly flow into the first sloping section **R1**, so as to lower a liquor ratio and makes the dyeing machine **100** energy-saving.

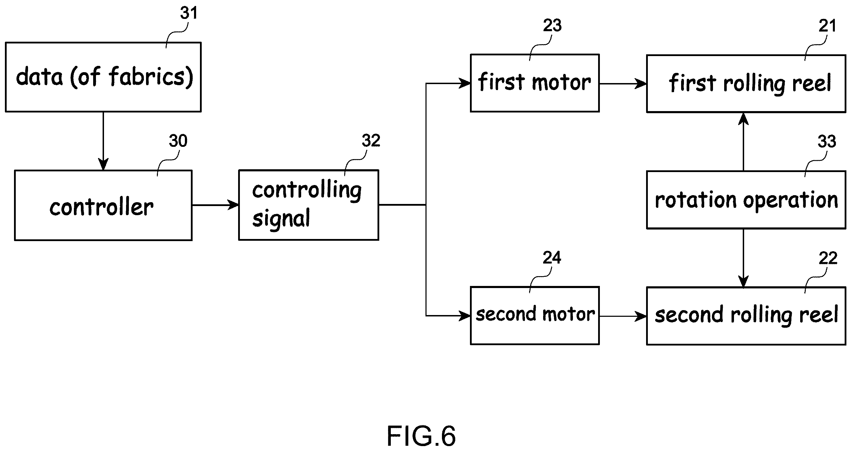

In addition, the controller **30** is arranged outside the body **10** and connected to the first and second motors **23**, **24** for controlling a rotational speed of the motors. FIG. 6 is the block diagram of the operation of the controller **30**. The data **31** of the fabric **C** such as the length and the weight can be inserted to the controller **30** and then the control **30** would send out controlling signals **32** to the first and second motors **23**, **24** for rotation operation **33**. The first and second rolling reels **21**, **22** can thereby adjust the rolling of the fabric **C** and improve the quality of the fabric **C**. The controller **30** can also make the fabric **C** to be rolled in a reverse direction for the nozzle **25** to cleanse the surfaces of the fabric **C**.

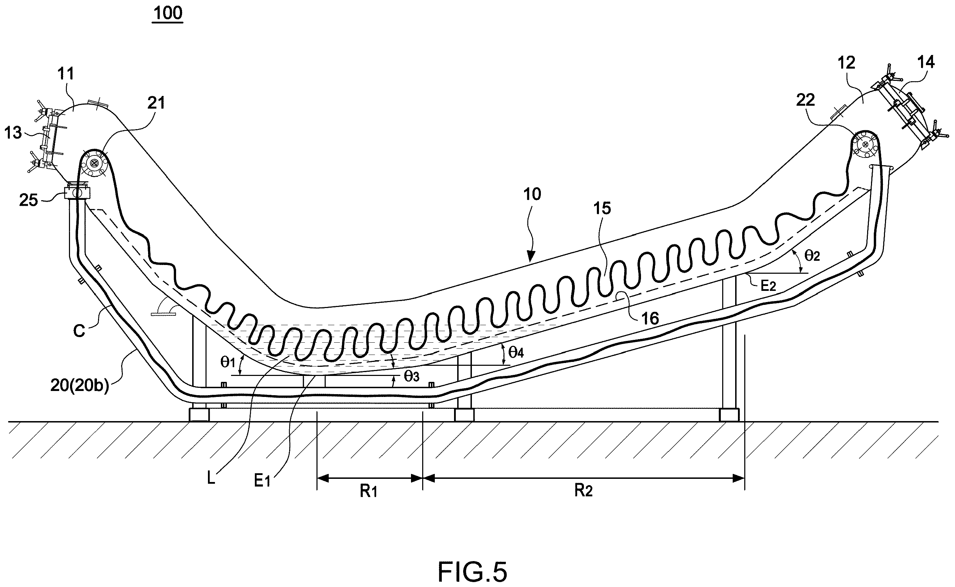

FIG. 5 illustrates the present invention in another applicable embodiment. The difference between the previous embodiment and this one is that in the previous embodiment, the guiding tube **20** is arranged above the body **10** to form an upward rolling structure **20a**, and in this embodiment, the guiding tube **20** is arranged below the body **10** to form a downward rolling structure **20b**.

Since the first and second sloping sections **R1**, **R2** at the middle part of the body **10** has different sloping angles and the angle **θ3** of the first sloping section **R1** is narrower than the angle **θ4** of the second sloping section **R2**, the fabric **C** would not be creased when going through the first sloping section **R1** and the liquid dye **L** would flow to the first sloping section **R1** quickly, thereby lowering the liquor ratio.

The first and second rolling reels **21**, **22** arranged respectively at the head section **11** and the rear section **12** are able to push and draw the fabric **C** to roll smoothly within the guiding tube **20** into the storage tank **15** for continuous spreading and dipping. In addition, the head section **11** and the rear section **12** of the body each has its corresponding rolling reel and opening to make the present invention a dyeing machine with dual heads.

With the dual rolling reels and the first and second sloping sections **R1**, **R2**, the dyeing machine **100** require lower pressure for the nozzle **25** to push and drive the fabric **C** for rolling, thereby avoid the need of motors that requires huge amounts of electricity and make the present invention energy-saving. On the other hand, with the lower pressure, the surface of the fabric **C** would not be damaged during the process and the quality of the fabric **C** after the dyeing process is therefore improved.

The controller **30** arranged outside the body **10** is connected to the first and second motors **23**, **24** for controlling of the rotational speed of both motors, thereby the rolling of the fabrics **C** can be adjusted appropriately and timely during the operation and ensure a better quality of the fabric **C**; also, the controller **30** is able to operate the rolling in a reverse direction for cleansing the surfaces of the fabric **C** by the nozzle **25**.

Although particular embodiments of the invention have been described in detail for purposes of illustration, various modifications and enhancements may be made without departing from the scope of the invention. Accordingly, the invention is not to be limited except by the appended claims.

## Claims

1. A dyeing machine with dual reels and low liquor ratio, comprising:
a body (10) having a first opening (13) at a head section (11) and a storage tank (15) inside said body (10);
a guiding tube (20) connecting said head section (11) and a rear section (12) of said body (10);
a first rolling reel (21) disposed at said head section (11) inside said body (10) near said first opening (13) and having a first axis (211) penetrating through said body (10) perpendicularly and connected to a first motor (23) to be driven by said first motor (23);
a nozzle (25) disposed at a front end of said guiding tube (20) to push and drive a piece of fabric (C) within said guiding tube (20) and said body (10) for continuous dipping, spreading and dyeing;
**characterized in that**
a second rolling reel (22) is disposed at said rear section (12) inside said body (10) near a rear end of said guiding tube (20) and having a second axis (221) penetrating through said body (10) perpendicularly and connected to a second motor (24), a second opening (14) further arranged at said rear section (12) corresponding to said second rolling reel (22);
the head section (11) and the rear section (12) of the body (10) are arranged upwardly with a first sloping section (R1) and a second sloping section (R2) arranged between a substantially lowest part (E1) of the body (10) and a sloping point (E2) of the body (10), an angle (θ3) of the first sloping section (R1) narrower than an angle (θ4) of the second sloping section (R2); and that
a controller (30) is arranged outside the body (10) and connected to the first and second motors (23), (24) for controlling a rotational speed of said motors;
whereby the fabric (C) is rolled by the first and second rolling reels (21), (22) within the guiding tube (20) smoothly into the storage tank (15); with the difference between the angles (θ3), (θ4) of the first and second sloping sections (R1), (R2), the fabric (C) is not creased and liquid dye (L) can quickly flow into the first sloping section (R1), so as to lower a liquor ratio.

2. The dyeing machine with dual reels and low liquor ratio as claimed in claim 1, wherein the angle (θ3) of the first sloping section (R1) is arranged between 2°-10° and the angle (θ4) of the second sloping section (R2) is arranged wider than 16°.

3. The dyeing machine with dual reels and low liquor ratio as claimed in claim 1, wherein the guiding tube (20) is arranged above the body (10) to form an upward rolling structure (20a).

4. The dyeing machine with dual reels and low liquor ratio as claimed in claim 1, wherein the guiding tube (20) is arranged below the body (10) to form a downward rolling structure (20b).
